# EUROPÄISCHE PATENTSCHRIFT

(11) **EP 0 861 394 B1**
(45) Veröffentlichungstag und Bekanntmachung des Hinweises auf die Patenterteilung: **23.01.2002**
(21) Anmeldenummer: 96945727.4
(22) Anmeldetag: 13.11.1996
(51) Int. Cl.: F16K 37/00, G21C 17/017

(54) **VERFAHREN ZUR ÜBERPRÜFUNG DER FUNKTIONSBEREITSCHAFT EINER ARMATUR**
PROCESS FOR TESTING THE OPERATION OF FITTINGS
PROCEDE POUR TESTER LE FONCTIONNEMENT DE ROBINETTERIES

(30) Priorität: 14.11.1995 DE 19542291
(43) Veröffentlichungstag der Anmeldung: 02.09.1998
(73) Patentinhaber: Framatome ANP GmbH, 91050 Erlangen (DE)
(72) Erfinder: KRÜGER, Stephan, D-63179 Obertshausen (DE); KRADEPOHL, Paul, D-63571 Gelnhausen (DE); STEIGLEDER, Norbert, D-55131 Mainz (DE)
(74) Vertreter: Mörtel & Höfner
(86) Internationale Anmeldenummer: DE9602177
(87) Internationale Veröffentlichungsnummer: WO9718452

(56) Entgegenhaltungen:
- EP-A- 0 629 804
- EP-A- 0 708 389
- WO-A-93/05378
- WO-A-95/08071
- FR-A- 2 524 603
- US-A- 4 949 288

## Beschreibung

Die Erfindung betrifft ein Verfahren zur Überprüfung der Funktionsbereitschaft einer Armatur, wobei mindestens ein Meßwert für eine armaturenspezifische Größe bestimmt und mit einem zuvor festgelegten Wert verglichen wird.

Zur Überprüfung der Funktionsbereitschaft einer Armatur war es bisher üblich, in Abständen bestimmte armaturenspezifische Größen, beispielsweise das Drehmoment, die Reibung der Stopfbuchse oder der Spindelmutter oder auch die Leerlaufleistung unter anforderungsnahen Bedingungen zu messen. Anforderungsnahe Bedingungen, sind dabei solche Bedingungen, wie hohe Temperatur und hoher Druck, der die Armatur noch standhalten muß, die aber beim Betrieb der Armatur nur selten erreicht werden. Ein Fehler der Armatur wurde dann angezeigt oder vermutet, wenn sich solche Meßwerte im Laufe der Zeit veränderten.

Messungen unter anforderungsnahen Bedingungen sind sehr aufwendig oder sogar, z.B. bei sehr hohen Temperaturen, überhaupt nicht durchführbar. Anforderungsnahe Bedingungen sind darüber hinaus in einer Anlage, deren Bestandteil die Armatur ist, nur schwer simulierbar, da z.B. Druck und Temperatur erhöht werden müssen. Unter solchen Bedingungen gewonnene Ergebnisse sind folglich schwer zu interpretieren. Damit ein Fehler der Armatur nicht übersehen wird, war es bisher üblich, schon bei geringen Veränderungen der Meßwerte einen Fehler anzuzeigen. Da eine Reparatur oder sogar ein Austausch einer fehlerhaften Armatur sehr aufwendig ist und in der Regel nur beim Stillstand der gesamten Anlage, die ein Kernkraftwerk sein kann, möglich ist, ist eine frühzeitige oder falsche Fehlermeldung unwirtschaftlich.

Der Erfindung liegt die Aufgabe zugrunde, ein Verfahren zur Überprüfung der Funktionsbereitschaft einer Armatur anzugeben, das nur dann eine Fehlermeldung vorsieht, wenn die Funktionsbereitschaft der Armatur wirklich gefährdet ist. Darüber hinaus soll der Nachweis der Funktionsbereitschaft der Armatur mit einer einfach durchzuführenden Messung bei Umgebungsdruck und Umgebungstemperatur möglich sein. Eine solche Messung könnte in einem Kraftwerk beispielsweise während der üblichen Revisionszeit erfolgen.

Die Aufgabe wird nach der Erfindung dadurch gelöst, daß der Meßwert im kalten und drucklosen Zustand der Armatur bestimmt und mit einem analytisch aus einem Funktionsmodell der Armatur bestimmten Wert für die armaturenspezifische Größe verglichen wird, daß für diesen analytisch bestimmten Wert ein oberer und ein unterer Grenzwert festgelegt werden, die noch tolerierbaren Zuständen der Armatur zugeordnet sind (Auslegungsreserve), und daß angezeigt wird, daß die Armatur funktionsbereit ist, wenn der Meßwert zwischen dem oberen und dem unteren Grenzwert liegt.

Ein solches Verfahren wird Armaturen-Diagnose- und Auswerte-Methode (ADAM) genannt.

Die Messung wird in der Regel von der Energieversorgung des Antriebes der Armatur (z.B. von der Schaltanlage) aus durchgeführt. Zur Erhöhung der Genauigkeit sind nach Bedarf Kalibriermessungen vor Ort möglich.

Mit dem Verfahren nach der Erfindung wird der Vorteil erzielt, daß dadurch, daß für jede armaturenspezifische Größe die Grenzwerte aufgrund der Auslegungsreserve der Armatur festgelegt werden, eine Fehlermeldung unterbleibt, wenn die Funktionsbereitschaft der Armatur nicht gefährdet ist. Durch die Einbeziehung der Grenzwerte in die Überprüfung wird auch der Vorteil erzielt, daß geringfügige Änderungen einer armaturenspezifischen Größe nicht zu einer vorzeitigen Fehlermeldung führen.

Darüber hinaus wird der Vorteil erzielt, daß eine Vorhersage des Armaturenverhaltens unter Anforderungsbedingungen, d.h. beim vorgesehenen Einsatz der Armatur, wenn eine hohe Temperatur und ein hoher Druck herrschen, auf der Basis einer sehr einfach durchführbaren Messung bei Umgebungsdruck und Umgebungstemperatur möglich ist.

Beispielsweise wird für den analytisch bestimmten Wert auch ein oberer und ein unterer Sollwert festgestellt, die die natürliche Schwankung des analytisch bestimmten Wertes abdekken. Dann wird angezeigt, daß die Armatur sich auslegungsgemäß verhält, falls der Meßwert zwischen dem oberen und dem unteren Sollwert liegt.

Der Sollwert weicht vom analytisch bestimmten Wert weniger ab als der Grenzwert. Während der Sollwert nur natürliche Schwankungen berücksichtigt, umfaßt der Grenzwert die für die Funktionsbereitschaft noch tolerierbaren Schwankungen. Eine Armatur ist nämlich stets derart aufgebaut, daß eine armaturenspezifische Größe von dem geforderten Wert mehr als die natürliche Schwankung vorgibt abweichen kann, ohne daß die Funktion der Armatur beeinträchtigt ist. Die dazu notwendige Auslegung der Armatur beinhaltet die sogenannte Auslegungsreserve.

Durch die zusätzliche Orientierung an den Sollwerten, die durch die natürliche Schwankung des analytisch bestimmten Wertes bestimmt sind, wird der zusätzliche Vorteil erzielt, daß frühzeitig erkannt wird, wenn sich die Armatur nicht auslegungsgemäß verhält, aber noch funktionsbereit ist. Es können dann wirksame Wartungsarbeiten zustandsorientiert eingeleitet werden. Ein Austausch der Armatur ist, da sie noch funktionsbereit ist, nicht erforderlich.

Für den Meßwert wird z.B. ein oberer und ein unterer Toleranzwert bestimmt, die auf die Meßgenauigkeit zurückzuführen sind. Es kann dann bereits die Funktionsbereitschaft bzw. das auslegungsgemäße Verhalten der Armatur verneint werden, wenn der untere Toleranzwert kleiner als der untere Grenzwert bzw. Sollwert oder der obere Toleranzwert größer als der obere Grenzwert bzw. Sollwert ist.

Die Armatur schließt beispielsweise den Antrieb, die Stromversorgung und die Schaltelemente ein. Die Armatur kann elektrisch, magnetisch, pneumatisch, hydraulisch oder durch Eigenmedium angetrieben sein. Die Bestimmung der Meßwerte erfolgt je nach der Art der Armatur durch geeignete Meßaufnehmer und Meßmethoden. Armaturenspezifische Größen können beispielsweise die Leerlaufleistung, das Laufmoment, die Spindelkraft, der Armaturenhub, der Ansprechstrom, der Entlastungsdruck und/oder die Laufzeit sein. Das Funktionsmodell kann das Verhalten der Armatur über den Hub oder sowohl über den Hub als auch in den Endlagen "AUF" und "ZU" beschreiben.

Das zur analytischen Bestimmung eines Wertes aufgestellte Funktionsmodell ist experimentell verifiziert. Seine Anwendbarkeit für die jeweilige Armaturenausführung ist durch Festigkeitsberechnungen mit Regeln der Mechanik und Konstruktionsbewertungen basierend auf Versuchsergebnissen abgesichert.

Beispielsweise werden mehrere Meßwerte bestimmt und ein Fehler der Armatur wird angezeigt, wenn die Meßwerte einem Trend unterliegen. Mit einer solchen Trendverfolgung wird der Vorteil erzielt, daß schon dann, wenn die Meßwerte noch innerhalb der beiden Grenzwerte bzw. Sollwerte liegen, eine Verschlechterung des Zustandes der Armatur erkannt werden kann.

Beispielsweise wird für mehrere Armaturen jeweils die Abweichung eines Meßwertes vom Grenzwert oder Sollwert bestimmt und es wird für eine Armatur bereits ein Fehler angezeigt, wenn der Meßwert mehr als bei der Mehrzahl der Armaturen vom Grenzwert bzw. Sollwert abweicht. Eine solche statistische Auswertung führt vorteilhaftweise dazu, daß frühzeitig, wenn die Meßwerte noch innerhalb der beiden Grenzwerte bzw. Sollwerte liegen, die weniger zuverlässigen Armaturen erkannt werden können, obwohl sie zu diesem Zeitpunkt noch nicht reparaturbedürftig sind.

Durch Online-Messungen mit zentraler Auswerteerfassung kann bedingt durch die damit erreichbare Meßhäufigkeit die Aussagegenauigkeit von Trendverfolgung und statistischer Auswertung erhöht werden.

Mit dem Verfahren nach der Erfindung wird insbesondere für eine zustandsorientierte Instandhaltung der Vorteil erzielt, daß nur solche Armaturen als fehlerhaft erkannt werden, deren Reparatur wirklich notwendig ist. Andererseits werden durch die Betrachtung der Sollwerte, durch die Ermittlung der Trends und durch die statistische Betrachtung Armaturen erkannt, die noch nicht reparaturbedürftig sind, die jedoch bei späteren Überprüfungen besonders zu beachten sind. Darüber hinaus wird der Vorteil erzielt, daß die erforderlichen Messungen während üblicher Revisionszeiten bei Umgebungsdruck und Umgebungstemperatur durchgeführt werden können.

## Patentansprüche

1. Verfahren zur Überprüfung der Funktionsbereitschaft einer Armatur, wobei mindestens ein Meßwert für eine armaturenspezifische Größe bestimmt und mit einem zuvor festgelegten Wert verglichen wird,
**dadurch gekennzeichnet, daß** der Meßwert im kalten und drucklosen Zustand der Armatur bestimmt und mit einem analytisch aus einem Funktionsmodell der Armatur bestimmten Wert für die armaturenspezifische Größe verglichen wird, daß für diesen analytisch bestimmten Wert ein oberer und ein unterer Grenzwert festgelegt werden, die noch tolerierbaren Zuständen der Armatur zugeordnet sind (Auslegungsreserve), und daß angezeigt wird, daß die Armatur funktionsbereit ist, wenn der Meßwert zwischen dem oberen und dem unteren Grenzwert liegt.

2. Verfahren nach Anspruch 1,
**dadurch gekennzeichnet, daß** für den analytisch bestimmten Wert ein oberer und ein unterer Sollwert festgestellt werden, die die natürliche Schwankung des analytisch bestimmten Werts abdecken, und daß angezeigt wird, daß die Armatur sich auslegungsgemäß verhält, wenn der Meßwert zwischen dem oberen und dem unteren Sollwert liegt.

3. Verfahren nach einem der Ansprüche 1 oder 2,
**dadurch gekennzeichnet, daß** die Armatur Antrieb, Stromversorgung und Schaltelemente einschließt.

4. Verfahren nach einem der Ansprüche 1 bis 3,
**dadurch gekennzeichnet, daß** das Funktionsmodell das Verhalten der Armatur über den Hub oder sowohl über den Hub als auch in den Endlagen "AUF" und "ZU" beschreibt.

5. Verfahren nach einem der Ansprüche 1 bis 4,
**dadurch gekennzeichnet, daß** mehrere Meßwerte bestimmt werden und ein Fehler der Armatur angezeigt wird, wenn die Meßwerte einem Trend unterliegen.

6. Verfahren nach einem der Ansprüche 1 bis 5,
**dadurch gekennzeichnet, daß** für mehrere Armaturen jeweils die Abweichung eines Meßwertes vom Grenzwert oder Sollwert bestimmt wird, und daß für eine Armatur bereits ein Fehler angezeigt wird, wenn der Meßwert mehr als bei der Mehrzahl der Armaturen vom Grenzwert oder Sollwert abweicht.

## Claims

1. A process for checking the operational readiness of a fitting, in which at least one measured value is determined for a fitting-specific parameter and is compared with a previously fixed value, **characterised in that** the measured value is determined in a cold and unpressurised condition of the fitting and is compared with a value for the fitting-specific parameter which is determined analytically from a function model of the fitting, **in that** an upper and a lower limiting value assigned to still-tolerable conditions of the fitting (design reserve) are fixed for this analytically determined value, and **in that**, when the measured value is between the upper and the lower limiting value, it is indicated that the fitting is ready for operation.

2. A process according to Claim 1, **characterised in that** an upper and a lower desired value are established for the analytically determined value, these covering the natural fluctuation in the analytically determined value, and **in that**, if the measured value is between the upper and the lower desired value, it is indicated that the fitting is behaving in accordance with the design.

3. A process according to one of Claims 1 and 2, **characterised in that** the fitting includes a drive, a power supply and switching elements.

4. A process according to one of Claims 1 to 3, **characterised in that** the function model describes the behaviour of the fitting over the stroke, or both over the stroke and in the "OPEN" and "CLOSED" end positions.

5. A process according to one of Claims 1 to 4, **characterised in that** a plurality of measured values are determined and a fault in the fitting is indicated if the measured values show a trend.

6. A process according to one of Claims 1 to 5, **characterised in that** the deviation in a measured value from the limiting value or desired value is determined in each case for a plurality of fittings, and **in that** a fault is indicated for a fitting once the measured value deviates from the limiting value or desired value to a greater extent than that of the majority of the fittings.

## Revendications

1. Procédé de vérification de l'aptitude à fonctionner d'une robinetterie, au moins une valeur de mesure d'une grandeur spécifique à la robinetterie étant déterminée et étant comparée à une valeur fixée à l'avance,
**caractérisé en ce qu'**il consiste à déterminer la valeur de mesure alors que la robinetterie est à l'état froid et sans pression et à la comparer à une valeur de la grandeur spécifique à la robinetterie qui a été déterminée analytiquement à partir d'un modèle de fonctionnement de la robinetterie, à fixer pour cette valeur déterminée analytiquement une valeur limite supérieure et une valeur limite inférieure qui sont associées à des états de la robinetterie que l'on peut encore tolérer (réserve de conception) et à indiquer que la robinetterie est prête à fonctionner si la valeur de mesure se trouve entre la valeur limite supérieure et la valeur limite inférieure.

2. Procédé suivant la revendication 1, **caractérisé en ce qu'**il consiste à établir pour la valeur déterminée analytiquement une valeur de consigne supérieure et une valeur de consigne inférieure, qui recouvrent la fluctuation naturelle de la valeur déterminée analytiquement, et à indiquer que la robinetterie se comporte conformément à ce pourquoi elle est conçue si la valeur de mesure est comprise entre la valeur de consigne supérieure et la valeur de consigne inférieure.

3. Procédé suivant la revendication 1 ou 2, **caractérisé en ce que** la robinetterie englobe un dispositif d'entraînement, une alimentation en courant électrique et des éléments de commutation.

4. Procédé suivant l'une des revendications 1 à 3, **caractérisé en ce que** le modèle de fonctionnement décrit le comportement de la robinetterie au cours de sa course ou à la fois au cours de sa course et dans les positions d'extrémité "fermé" et "ouvert".

5. Procédé suivant l'une des revendications 1 à 4, **caractérisé en ce qu'**il consiste à déterminer plusieurs valeurs de mesure et à indiquer une défaillance de la robinetterie si les valeurs de mesure sont soumises à une tendance.

6. Procédé suivant l'une des revendications 1 à 5, **caractérisé en ce qu'**il consiste à déterminer pour plusieurs robinetteries respectivement l'écart d'une valeur de mesure à la valeur limite ou à la valeur de consigne et à indiquer pour une robinetterie une défaillance dès que la valeur de mesure s'écarte plus que pour la pluralité des robinetteries de la valeur limite ou de la valeur de consigne.
